## Europäisches Patentamt
## European Patent Office
## Office européen des brevets

(19)

(11) Veröffentlichungsnummer: **0 052 720**

**A1**

(12) # EUROPÄISCHE PATENTANMELDUNG

(21) Anmeldenummer: 81107821.1

(22) Anmeldetag: 01.10.81

(51) Int. Cl.³: **H 04 L 11/14**

(30) Priorität: 25.11.80 DE 3044390

(43) Veröffentlichungstag der Anmeldung:
02.06.82 Patentblatt 82/22

(84) Benannte Vertragsstaaten:
CH FR GB IT LI NL SE

(71) Anmelder: SIEMENS AKTIENGESELLSCHAFT Berlin
und München
Postfach 22 02 61
D-8000 München 22(DE)

(72) Erfinder: Hans, Karl, Ing. grad.
Anzinger Strasse 18
D-8000 München 80(DE)

(54) **Anordnung zur Stromversorgung einer Textstation.**

(57) Zur Stromversorgung einer Textstation ist eine Hilfs-stromversorgung (H) und eine Hauptstromversorgung (S) vorgesehen. Die Hilfsstromversorgung (H) versorgt eine an eine Fernleitung (FL) angeschlossene Übertragungseinheit (UB) der Textstation mit mindestens einer Betriebsspannung (UH). Die Hauptstromversorgung (S) versorgt eine Eingabe-einheit (TA), eine Steuereinheit (ST) und eine Ausgabeein-heit (DR) der Textstation mit mindestens einer Betriebsspan-nung (US). Im Ruhezustand ist nur die Hilfsstromversorgung (H) eingeschaltet. Bei einem von der Übertragungseinheit (UB) empfangenen ankommenden Ruf oder nach dem Betätigen einer Taste (E) an der Eingabeeinheit (TA) wird die Hauptstromversorgung (S) eingeschaltet. Wenn von der Textstation durchzuführende Funktionen vollständig abge-schlossen sind und nach einer vorgegebenen Zeitdauer keine weiteren Funktionen durchzuführen sind, wird die Hauptstromversorgung (S) selbsttätig abgeschaltet. Wäh-rend des Einschaltens und des Ausschaltens der Haupt-stromversorgung (S) wird an die Steuereinheit (ST) ein Rücksetzsignal (R) abgegeben, das in dieser einen vorgege-benen Zustand einstellt.

FIG 1

SIEMENS AKTIENGESELLSCHAFT
Berlin und München

0052720
VPA 80 P 6226 E

## Anordnung zur Stromversorgung einer Textstation

Die Erfindung bezieht sich auf eine Anordnung zur Stromversorgung einer Textstation, die mindestens eine Eingabeeinheit, Steuereinheit, Ausgabeeinheit und Übertragungseinheit enthält und die mittels der Übertragungseinheit Daten zu einer entfernten Textstation sendet und/oder von dieser empfängt.

Es sind bereits allgemein Textstationen bekannt, mit denen einerseits in einem Lokalbetrieb Texte be- und/ oder verarbeitet werden können und mit denen andererseits Texte über eine Fernleitung und Vermittlungsstellen zu einer entfernten Textstation gesendet werden können oder von dieser empfangen werden können. Da die Textstation ständig in der Lage sein muß, Texte zu empfangen, darf diese auch im unbedienten Betrieb nicht vollständig abgeschaltet werden.

Um eine minimale Leistungsaufnahme der Textstation zu erreichen, wäre es denkbar, jeweils diejenigen Teile der Textstation abzuschalten, die für die gerade von der Textstation durchzuführenden Funktionen nicht erforderlich sind. In diesem Fall muß allerdings sichergestellt sein, daß die Textstation innerhalb einer vorgegebenen Reaktionszeit wieder voll funktionsfähig ist. Beim Abschalten der Teile der Textstation muß darauf geachtet werden, daß alle internen Verarbeitungsvorgänge vollständig abgeschlossen sind bzw. sich die Textstation in einem abschaltbaren Zustand befindet. Zur Vermeidung von Fehlbedienungen wäre es erforderlich, eine Anordnung vorzusehen, die selbsttätig den abschaltbaren Zustand ermittelt und diesen der Bedienperson mitteilt.

Ret 1 Kdg / 24. 11. 1980

Die Bedienperson könnte dann nach dem Erreichen des abschaltbaren Zustands mittels einer Taste das Gerät ausschalten. Dies erfordert jedoch einen verhältnismäßig
großen Aufwand und stellt einen geringen Bedienungskomfort der Textstation dar.

Der Erfindung liegt daher die Aufgabe zugrunde, eine
Anordnung zur Stromversorgung einer Textstation anzugeben, die einerseits die Leistungsaufnahme der Textstation an die jeweiligen Erfordernisse selbsttätig anpaßt und die andererseits einen großen Bedienungskomfort
aufweist.

Erfindungsgemäß wird die Aufgabe bei der Anordnung der
eingangs genannten Art gelöst durch eine Hilfsstromversorgung, die die Übertragungseinheit mit mindestens
einer Betriebsspannung versorgt, durch eine abschaltbare
Hauptstromversorgung, die die Eingabeeinheit, die Steuereinheit und die Ausgabeeinheit mit mindestens einer
Betriebsspannung versorgt und durch eine Überwachungseinheit, die durch die Hilfsstromversorgung mit mindestens
einer Betriebsspannung versorgt wird, die ein die Hauptstromversorgung einschaltendes Signal erzeugt, wenn über
die Übertragungseinheit Daten empfangen werden oder wenn
eine Einschalttaste an der Eingabeeinheit betätigt wird
und die ein die Hauptstromversorgung ausschaltendes
Signal erzeugt, wenn von der Textstation durchzuführende
Funktionen abgeschlossen sind und nach einer vorgegebenen
Zeitdauer keine weiteren Funktionen durchzuführen sind.

Die Anordnung gemäß der Erfindung hat den Vorteil, daß
die Textstation im Ruhezustand eine sehr geringe Leistungsaufnahme aufweist, so daß im Ruhezustand keine Zwangsbelüftung der Stromversorgung erforderlich ist. Die Textstation ist nach dem Empfang von Daten oder nach dem
Betätigen der Einschalttaste nach kurzer Zeit vollständig betriebsbereit und die Bedienperson ist vom Anschaltvorgang vollständig entlastet.

Um in der Textstation beim Einschalten und beim Ausschalten einen definierten Zustand einstellen zu können, ist es günstig, wenn die Überwachungseinheit eine Rücksetzeinheit enthält, die beim Einschalten und beim Ausschalten der Hauptstromversorgung ein Rücksetzsignal an die Steuereinheit abgibt.

Zum Erzeugen des Rücksetzsignals jeweils eine vorgegebene Zeitdauer nach dem Einschalten ist es günstig, wenn die Rücksetzeinheit aus einer ersten Rücksetzstufe und einer zweiten Rücksetzstufe besteht. Zweckmäßigerweise enthält die zweite Rücksetzstufe einen Zähler, der durch Taktimpulse fortgeschaltet wird und der nach dem Erreichen eines vorgegebenen Zählerstands das Rücksetzsignal beendet.

Um eine vorgegebene Zeitdauer des Rücksetzsignals beim Einschalten zu gewährleisten, ist es vorteilhaft, wenn der zweiten Rücksetzstufe eine Sperrstufe vorgeschaltet ist, die die Taktimpulse erst dann zum Zähler durchschaltet, wenn eine von der Hauptstromversorgung abgegebene Betriebsspannung einen vorgegebenen Wert erreicht hat.

Das Einschalten bzw. Ausschalten der Hauptstromversorgung erfordert insbesondere dann einen geringen Aufwand, wenn die Überwachungseinheit eine Schaltstufe enthält, die mit einem Flip-Flop versehen ist, das zurückgesetzt wird, wenn die Hilfsstromversorgung eingeschaltet wird, wenn von der Übertragungseinheit Daten empfangen werden oder wenn die Einschalttaste betätigt wird, das gesetzt wird, wenn die Steuereinheit ein Ausschaltsignal erzeugt und das an seinen Ausgang das die Hauptstromversorgung ein- bzw. ausschaltende Signal abgibt.

Im folgenden wird ein Ausführungsbeispiel der Anordnung gemäß der Erfindung anhand von Zeichnungen näher erläutert.

Es zeigen:

Figur 1 ein Blockschaltbild einer mit der Anordnung
        versehenen Textstation,

Figur 2 ein Schaltbild einer Überwachungseinheit.

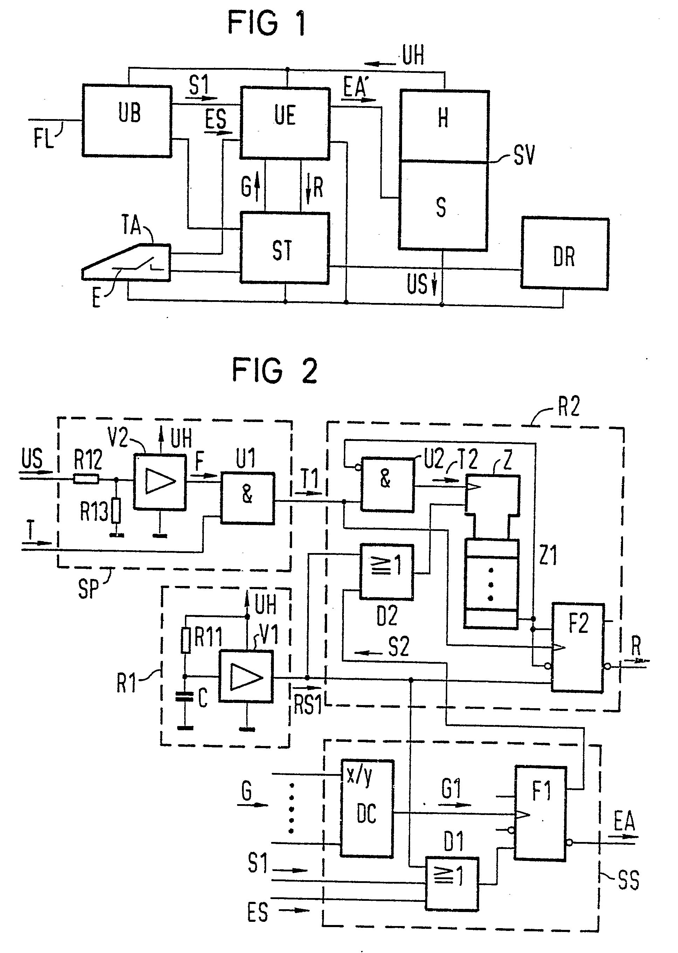

Die in Figur 1 dargestellte Textstation enthält eine zentrale Steuereinheit ST, die vorzugsweise mit einem Mikroprozessor versehen ist. Als Eingabeeinheit enthält die Textstation eine Tastatur TA und als Ausgabeeinheit dient ein Drucker DR. Unter Verwendung der Steuereinheit ST, der Tastatur TA und dem Drucker DR ist eine lokale Erstellung von Texten möglich. Für eine Textbearbeitung und eine Textverarbeitung ist in der Steuereinheit ein Speicher vorgesehen. Zusätzlich können als weitere Eingabeeinheiten oder Ausgabeeinheiten Speicher vorgesehen sein, wie beispielsweise Magnetblasenspeicher oder Floppy-Disk-Speicher. Außerdem kann als Ausgabeeinheit ein Bildschirm vorgesehen sein. Die Textstation ist über eine Übertragungseinheit UB an einer Fernleitung FL angeschlossen. Mittels der Übertragungseinheit UB kann die Textstation Texte an einen fernen Teilnehmer senden und/oder von diesem empfangen. Zum Erzeugen der Betriebsspannungen der Textstation ist eine Stromversorgungseinheit SV vorgesehen, die vorzugsweise als Netzgerät ausgebildet ist. Die Stromversorgungseinheit SV besteht aus einer Hilfsstromversorgung H und einer Hauptstromversorgung S. Die Hauptstromversorgung S erzeugt mindestens eine Betriebsspannung US für die Steuereinheit ST, die Eingabeeinheit TA, die Ausgabeeinheit DR und gegebenenfalls für die weiteren Ein- und Ausgabeeinheiten und Speicher. Die Hilfsstromversorgung H erzeugt mindestens eine Betriebsspannung UH für die Übertragungseinheit UB und eine Überwachungseinheit UE.

Im Ruhezustand der Textstation ist nur die Hilfsstromversorgung H eingeschaltet. Damit sind die Übertragungseinheit UB und die Überwachungseinheit UE betriebsbereit.

Wenn die Übertragungseinheit UB über die Fernleitung FL
Daten empfängt, die eine Übertragung eines Textes ankündigen, gibt sie ein Signal S1 an die Überwachungseinheit UE ab. Diese erzeugt ein Signal EA mit dem Binärwert 1, das ein Einschalten der Hauptstromversorgung S bewirkt. Wenn die Hauptstromversorgung S die Betriebsspannung US abgibt, erzeugt die Überwachungsschaltung UE
ein Rücksetzsignal R, das in der Steuereinheit ST einen
definierten Zustand einstellt. In ähnlicher Weise wird
das Signal EA erzeugt, wenn an der Tastatur TA eine Einschalttaste E betätigt wird und ein Einschaltsignal ES
an die Überwachungseinheit UE abgegeben wird.

Wenn der Empfang eines Textes beendet ist und während
einer vorgegebenen Zeitdauer von beispielsweise 3 Minuten
keine weiteren Texte empfangen werden oder wenn im Lokalbetrieb alle von der Textstation durchzuführenden Funktionen abgeschlossen sind und während der vorgegebenen
Zeitdauer keine weiteren Funktionen durchzuführen sind,
gibt die Steuereinheit ST an die Überwachungseinheit UE
ein Signal G ab, das den Grundzustand anzeigt. In Abhängigkeit vom Signal G nimmt das Signal EA den Binärwert
0 an und die Hauptstromversorgung S wird abgeschaltet.
Um auch während des Abschaltens einen definierten Zustand
in der Steuereinheit ST beibehalten zu können, gibt die
Überwachungseinheit UE wieder ein Rücksetzsignal R an
die Steuereinheit ST ab. Weitere Einzelheiten der Anordnung werden im folgenden zusammen mit dem in Figur 2
dargestellten Schaltbild der Überwachungseinheit UE beschrieben.

Die Überwachungseinheit UE enthält eine Schaltstufe SS,
die in Abhängigkeit von den Signalen S1, ES und G das
Signal EA erzeugt, mit dem die Hauptstromversorgung S
ein- oder ausgeschaltet wird. Weiterhin enthält die Überwachungseinheit UE eine Rücksetzeinheit, die aus zwei
Rücksetzstufen R1 und R2 gebildet wird und eine Sperrstufe SP.

Beim Einstecken des Netzsteckers der Textstation wird
die Hilfsstromversorgung H eingeschaltet. Damit liegt
die Betriebsspannung UH an der Übertragungseinheit UB
und der Überwachungseinheit UE an. Falls ein Flip-Flop F1
in der Schaltstufe SS zurückgesetzt ist, wird auch die
Hauptstromversorgung S eingeschaltet, da an seinem invertierenden Ausgang das Signal EA mit dem Binärwert 1
abgegeben wird. Falls das Flip-Flop F1 gesetzt ist,
bleibt die Hauptstromversorgung S zunächst ausgeschaltet.

Die Rücksetzstufe R1 enthält einen Verstärker V1, an
dessen Eingang ein Kondensator C angeschlossen ist,
der über einen Widerstand R11 beim Einschalten der Hilfsstromversorgung H aufgeladen wird. Bis die Spannung am
Kondensator C einen vorgegebenen Wert überschreitet,
gibt die Rücksetzstufe R1 ein Rücksetzsignal RS1 über
ein ODER-Glied D1 an ein Flip-Flop F1 ab. Das Flip-Flop
F1 wird zurückgesetzt und es gibt das Signal EA ab, mit
dem spätestens nun die Hauptstromversorgung S eingeschaltet wird.

Das Rücksetzsignal RS1 setzt außerdem in der Rücksetzstufe R2 ein Flip-Flop F2 zurück, so daß an dessen invertierendem Ausgang das Rücksetzsignal R abgegeben wird,
das in der Steuereinheit ST einen definierten Zustand
einstellt. Weiterhin setzt das Rücksetzsignal RS1 über
ein ODER-Glied D2 einen Zähler Z auf einen Anfangszählerstand zurück. Wenn eine der Betriebsspannungen US
der Hauptstromversorgung S einen vorgegebenen Wert erreicht hat, gibt ein Verstärker V2, der über einen aus
zwei Widerständen R12 und R13 gebildeten Spannungsteiler
angesteuert wird, ein Freigabesignal F an einen ersten
Eingang eines UND-Gliedes U1 ab. An dem zweiten Eingang
des UND-Gliedes U1 liegen Taktimpulse T konstanter Folgefrequenz an. Beim Auftreten des Freigabesignals F werden
die Taktimpulse T als Taktimpulse T1 am Ausgang des UND-Gliedes U1 abgegeben. Die Taktimpulse T1 werden über ein weiteres UND-Glied U2 als Taktimpulse T2 dem Takteingang des Zählers Z zugeführt. Wenn dieser einen vorgegebenen Zählerstand erreicht und seine höchste Zählstufe den Binärwert 1 annimmt, wird mit dem nächstfolgenden Taktimpuls T1 das Flip-Flop F2 gesetzt und das Rücksetzsignal R wird damit beendet. Die Steuereinheit ST wird dann freigegeben, so daß mit der Bearbeitung von Funktionen begonnen werden kann. Gleichzeitig werden durch das UND-Glied weitere Taktimpulse T2 gesperrt.

Falls während der vorgegebenen Zeitdauer von beispielsweise 3 Minuten von der Textstation keine Funktionen ausgeführt werden, gibt die Steuereinheit ST das Signal G an die Schaltstufe SS ab. Falls die Steuereinheit ST einen Mikroprozessor enthält, kann die Schaltstufe SS beispielsweise an den Adressenbus des Mikroprozessors angeschlossen werden. Wenn der Mikroprozessor erkennt, daß sich die Textstation in einem abschaltbaren Zustand befindet, legt er eine bestimmte Adresse auf den Adressenbus. Diese Adresse stellt das Signal G dar, das aus einer Mehrzahl von Einzelsignalen besteht. Die Schaltstufe SS enthält einen Decodierer DC, der die Adresse erkennt und ein Signal G1 an das Flip-Flop F1 abgibt. Das Flip-Flop F1 wird dadurch gesetzt und das Signal EA nimmt den Binärwert 0 an, wodurch die Hauptstromversorgung S abgeschaltet wird. Am nichtinvertierenden Ausgang des Flip-Flops F1 wird gleichzeitig ein Signal S2 abgegeben, das über das ODER-Glied D2 den Zähler Z zurücksetzt. Die Betriebsspannung US nimmt beim Abschalten der Hauptstromversorgung S nur langsam ab, so daß noch einige Taktimpulse T1 abgegeben werden. Das Signal Z1 am Ausgang des Zählers Z hat nach dem Zurücksetzen den Binärwert 0, so daß mit einem Taktimpuls T1 das Flip-Flop F2 zurückgesetzt wird und wieder ein Rücksetzsignal R abgegeben wird.

Die Hauptstromversorgung S bleibt so lange ausgeschaltet, bis von der Übertragungseinheit UB Texte empfangen werden oder bis die Einschalttaste E betätigt wird. Wenn das Signal S1 oder das Einschaltsignal ES erzeugt werden, werden diese über das ODER-Glied D1 dem Flip-Flop F1 zu-geführt, so daß dieses zurückgesetzt wird und das Signal EA den Binärwert 1 annimmt. Damit wird die Hauptstromversorgung S wieder eingeschaltet. Wenn die Betriebsspannung US wieder den vorgegebenen Spannungswert überschreitet, werden wieder Taktimpulse T1 abgegeben und der Zähler Z wird wieder solange fortgeschaltet, bis er seinen vorgegebenen Zählerstand erreicht. Wenn dies der Fall ist, wird das Flip-Flop F2 wieder gesetzt und das Rücksetzsignal R beendet, so daß die Textstation dann zur Durchführung der entsprechenden Funktionen bereit ist. Gleichzeitig wird wieder über das UND-Glied U2 die Zuführung weiterer Taktimpulse T2 zum Zähler Z gesperrt. Wenn alle Funktionen vollständig durchgeführt sind und die Textstation wieder während einer vorgegebenen Zeitdauer einen Grundzustand einnimmt, wird sie wieder, wie bereits oben beschrieben, selbsttätig ausgeschaltet.


6 Patentansprüche
2 Figuren

Patentansprüche

1. Anordnung zur Stromversorgung einer Textstation, die mindestens eine Eingabeeinheit, Steuereinheit, Ausgabeeinheit und Übertragungseinheit enthält und die mittels der Übertragungseinheit Daten zu einer entfernten Textstation sendet und/oder von dieser empfängt, g e k e n n z e i c h n e t   d u r c h eine Hilfsstromversorgung (H), die die Übertragungseinheit (UB) mit mindestens einer Betriebsspannung (UM) versorgt, durch eine abschaltbare Hauptstromversorgung (S), die die Eingabeeinheit (TA), die Steuereinheit (ST) und die Ausgabeeinheit (DR) mit mindestens einer Betriebsspannung (US) versorgt und durch eine Überwachungseinheit (UE), die durch die Hilfsstromversorgung (H) mit mindestens einer Betriebsspannung (UH) versorgt wird, die ein die Hauptstromversorgung (S) einschaltendes Signal (EA) erzeugt, wenn über die Übertragungseinheit (UB) Daten empfangen werden oder wenn eine Einschalttaste (E) an der Eingabeeinheit (TA) betätigt wird und die ein die Hauptstromversorgung (S) ausschaltendes Signal (EA) erzeugt, wenn von der Textstation durchzuführende Funktionen abgeschlossen sind und nach einer vorgegebenen Zeitdauer keine weiteren Funktionen durchzuführen sind.

2. Anordnung nach Anspruch 1, d a d u r c h   g e k e n n z e i c h n e t , daß die Überwachungseinheit (UE) eine Rücksetzeinheit (R1, R2) enthält, die beim Einschalten und beim Ausschalten der Hauptstromversorgung (S) ein Rücksetzsignal (R) an die Steuereinheit (ST) abgibt.

3. Anordnung nach Anspruch 2, d a d u r c h   g e k e n n z e i c h n e t , daß die Rücksetzeinheit (R1, R2) aus einer ersten Rücksetzstufe (R1) und einer zweiten Rücksetzstufe (R2 besteht.

4. Anordnung nach Anspruch 3,
d a d u r c h   g e k e n n z e i c h n e t ,
daß die zweite Rücksetzstufe (R2) einen Zähler (Z) enthält, der durch Taktimpulse (T) fortgeschaltet wird und
der nach dem Erreichen eines vorgegebenen Zählerstandes
das Rücksetzsignal (R) beendet.

5. Anordnung nach Anspruch 4,
d a d u r c h   g e k e n n z e i c h n e t ,
daß der zweiten Rücksetzstufe (R2) eine Sperrstufe (SP)
vorgeschaltet ist, die die Taktimpulse (T) erst dann zum
Zähler (Z) durchschaltet, wenn eine von der Hauptstromversorgung (S) abgegebene Betriebsspannung (US) einen
vorgegebenen Wert erreicht hat.

6. Anordnung nach einem der vorangehenden Ansprüche,
d a d u r c h   g e k e n n z e i c h n e t ,
daß die Überwachungseinheit (UE) eine Schaltstufe (SS)
enthält, die mit einem Flip-Flop (F1) versehen ist, das
zurückgesetzt wird, wenn die Hilfsstromversorgung (H)
eingeschaltet wird, wenn von der Übertragungseinheit (UE)
Daten empfangen werden oder wenn die Einschalttaste (E)
betätigt wird, das gesetzt wird, wenn die Steuereinheit
(ST) ein Ausschaltsignal (G) erzeugt und das an seinem
Ausgang das die Hauptstromversorgung (S) ein- bzw. ausschaltende Signal (EA) abgibt.

FIG 1

FIG 2

0052720

**Europäisches Patentamt**

# EUROPÄISCHER RECHERCHENBERICHT

Nummer der Anmeldung

EP 81 10 7821

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - A - 2 644 431</u> (OLIVETTI)<br><br>* Seite 8, Zeile 9 - Seite 9, Zeile 2; Seite 11, Zeile 6 - Seite 12, Zeile 16; Seite 18, Zeilen 1-21; Figuren 1,2 *<br><br>-- | 1 |
| A | TELCOM REPORT, Band 3, Heft 2, April 1980, Seiten 110-116 München, DE.<br>L. LUTZ et al.: "Textstationen für den Teletexdienst"<br><br>* Seite 112, rechte Spalte, Zeilen 21-41 *<br><br>-- | 1 |
| PX | IBM TECHNICAL DISCLOSURE BULLETIN Band 23, Nr. 7A, Dezember 1980, Seiten 2886-2887 New York, U.S.A.<br>J.D. HILL et al.: "Auto-answer communicating typewriter with a power-saver feature"<br><br>* Insgesamt *<br><br>---- | 1 |

**KLASSIFIKATION DER ANMELDUNG (Int. Cl.3)**

H 04 L 11/14

**RECHERCHIERTE SACHGEBIETE (Int. Cl.3)**

H 04 L 11/14
11/15
13/00
13/02

Der vorliegende Recherchenbericht wurde für alle Patentansprüche erstellt.

| Recherchenort | Abschlußdatum der Recherche | Prüfer |
|---|---|---|
| Den Haag | 01-03-1982 | WANZEELE |

EPA form 1503.1   06.78